# EUROPÄISCHE PATENTANMELDUNG

(11) **EP 1 323 935 A1**
(43) Veröffentlichungstag der Anmeldung: **02.07.2003**
(21) Anmeldenummer: 02028077.2
(22) Anmeldetag: 17.12.2002
(51) Int. Cl.: F16B 25/00, F16B 25/10, F16B 33/02

(54) **Gewindeformende Schraube zum Einschrauben in Beton, Stein, Mauerwerk oder dergleichen**

(30) Priorität: 18.12.2001 DE 20120466 U
(71) Anmelder: Berner GmbH, 74653 Künzelsau (DE)
(72) Erfinder: Runge, Erich, 74653 Künzelsau (DE)
(74) Vertreter: Kitzhofer, Thomas, Dipl.-Ing.

(57) **Zusammenfassung**

Eine gewindeformende Schraube zum unmittelbaren Einschrauben in Beton, Stein, Mauerwerk oder dergleichen, hat ein Gewinde (7), welches sich von der Schraubenspitze bis nahe zum Schraubenkopf (3) erstreckt, wobei das Gewinde (7) von einem spitzenseitigen Ende (9) bis zu einem kopfseitigen Ende (11) durch sich im wesentlichen axial erstreckende Nuten (17, 17") stellenweise unterbrochen ist, und wobei das Gewinde (7) nahe des spitzenseitigen Endes (9) durch mehr Nuten (17, 17") unterbrochen ist als nahe des kopfseitigen Endes (11).

## Beschreibung

Die Erfindung betrifft eine gewindeformende Schraube zum unmittelbaren Einschrauben in harte, spröde Werkstoffe wie Beton, Stein, Mauerwerk oder dergleichen.

Solche Schrauben werden auch als Betonschrauben bezeichnet. Sie können ohne das Vorsehen eines Dübels direkt in eine Bohrung in Beton oder Stein eingedreht werden und schneiden sich das Gewinde selbst. Diese Schrauben zeichnen sich durch eine besondere Härte und Gewindeform aus.

Es sind Betonschrauben angedacht, beispielsweise aus der EP 0 433 484 B1, der EP 0 623 759 B1 und der EP 0 697 071 B1, bei denen das Gewinde durch Ausnehmungen unterbrochen ist, wobei der in Schneidrichtung hintere Rand der Ausnehmung als bugförmige Schneidezähne ausgeführt ist. Das Gewinde hat damit eine gezackte Struktur, wobei die Schneiden den Zweck haben, sich in das Material einzuschneiden, um das Gewinde zu formen.

Die Erfindung schafft eine gewindeformende Schraube, die sich durch ein niedriges Eindrehmoment auszeichnet.

Die erfindungsgemäße Schraube hat ein Gewinde, welches sich von der Schraubenspitze bis nahe zum Schraubenkopf erstreckt, wobei das Gewinde von seinem spitzenseitigem Ende bis zu seinem kopfseitigem Ende durch sich im wesentlichen axial erstreckende Nuten stellenweise unterbrochen ist und wobei das Gewinde nahe des spitzenseitigen Endes durch mehr Nuten unterbrochen ist als nahe des kopfseitigen Endes.

Im Stand der Technik gemäß der EP 0 433 484 B1 ist ausgeführt, daß die Anzahl der bugförmigen Schneidezähne zur Schraubenspitze hin abnehmen soll.

Bei der Erfindung geht es weniger darum, daß das Gewinde eine sägezahnartige Struktur aufweist als vielmehr darum, genügend Aufnahmeraum für das Bohrmehl bereitzustellen. Wie sich bei Untersuchungen herausgestellt hat, wird das hohe Eindrehmoment insbesondere durch Bohrmehl verursacht, das am Gewindeende zum Klemmen führt. Die Erfindung sieht nun vor, daß nicht am Gewindeende, also in der Nähe des Schraubenkopfes, mehr Raum für das Bohrmehl geschaffen wird, sondern im Bereich der Spitze. Durch die Erfindung wird das Bohrmehl gleich beim Entstehen möglichst bleibend in den durch die Nuten geschaffenen Räume untergebracht, um dann möglichst nicht mehr aus ihnen herauszuwandern. Am Gewindeende können dann weniger Räume vorgesehen sein, da weniger Bohrmehl entstehen sollte. Durch die geringere Anzahl von Nuten am Gewindeende werden die Ausreißkraft erhöht und der Sitz im Werkstück verbessert.

Vorzugsweise hat die Schraube eine abgeflachte Spitze, wobei im Bereich des möglicherweise etwas konischen Spitzenendes gar kein Gewinde vorgesehen sein müßte. Durch die fehlende Spitze erreicht man eine leichtere Fertigung der Schraube.

Wenn ein zusätzliches Zentriergewinde vorgesehen ist, welches parallel zum zuvor erwähnten Gewinde verläuft, läßt sich die Schraube besser im Bohrloch ausrichten. Die Gewindetiefe des Gewindes ist dabei mehr als doppelt so groß wie die des Zentriergewindes. Bevorzugt ist sie sogar mehr als dreimal so groß wie die des Zentriergewindes. Durch das Zentriergewinde wird vermieden, daß der Schaft im Bohrloch reibt. Es hat sich herausgestellt, daß mit dem Zentriergewinde ein geringeres Eindrehmoment erreicht werden kann als ohne dieses. Da bei den Versuchen keine Schleifspuren im Bohrloch gefunden werden konnten, läßt sich daraus schließen, daß der Schaft nicht wie bei bekannten Betonschrauben am Bohrloch reibt.

Vorzugsweise erstrecken sich die Nuten auch durch das Zentriergewinde, um zusätzlichen Raum zur Unterbringung des Bohrmehls zu schaffen und um zu verhindern, daß das Bohrmehl aus den durch die Nuten geschaffenen Räumen austritt.

Die Nuten, in Querschnitten nahe des spitzenseitigen und des kopfseitigen Endes gesehen, sollten symmetrisch zur Schraubenachse liegen.

Die Nuten eines Gewindegangs sollten ferner zu den Nuten des benachbarten Gewindegangs ausgerichtet sein, so daß sie längs einer Linie verlaufen, was die Herstellung der Nuten vereinfacht.

Die Linie bildet bevorzugt auf der Schaftoberfläche eine Wendel mit extrem hoher Steigung, so daß sie annähernd axial verläuft. Die Linie sollte das Gewinde bevorzugt rechtwinkelig schneiden. Dadurch ergeben sich im Gegensatz zum Stand der Technik keine schrägen Schneidflächen am Übergang der die Nut bestimmenden Stirnflächen zu den Flanken des Gewindes. Die Stirnflächen sollen nämlich im Gegensatz zu den bugförmigen Schneidzähnen im Stand der Technik keine Schneidwirkung haben, sondern nur zur Unterbringung des Bohrmehls dienen. Im Stand der Technik wirken die bugförmigen Schneidzähne nämlich aufgrund ihrer Form und ihres Anstellwinkels so, daß das Bohrmehl radial nach außen gedrängt wird, also aus den Ausnehmungen heraus. Es werden zwar mehrere Zähne zur Unterstützung des Gewindeschneidens erzeugt, das Bohrmehl verklemmt sich aber zwischen Schaft und Bohrloch oder am Gewindeende zwischen dem Gewinde und dem Bohrloch, so daß das Eindrehmoment erhöht wird.

Vorzugsweise sind am spitzenseitigen Ende vier am Umfang gleichmäßig verteilte Nuten und nahe des kopfseitigen Endes zwei sich axial gegenüberliegende Nuten vorgesehen. Dabei ist es bevorzugt, wenn die zwei Nuten am kopfseitigen Ende auf einer Linie liegen, der auch zwei der vier Nuten am spitzenseitigen Ende zugeordnet sind. Dies vereinfacht die Herstellung der Nuten.

Damit verhindert wird, daß beim Eindrehen das sich in den Nuten befindliche Bohrmehl aus den Nuten herausbewegt, kann zusätzlich oder alternativ vorgesehen sein, daß die Nuten, quer zur Gewindelängserstreckung gesehen, einen zumindest annähernd rechtwinkligen Übergang zur Gewindespitze haben, und zwar zumindest am Übergang der in Eindrehrichtung hinteren Stirnfläche der Nut. Vorzugsweise wird sogar eine Hinterschneidung vorgesehen, das heißt, es entsteht eine Art Tasche durch einen spitzwinkeligen Übergang zur Gewindespitze.

Die Nut kann trotz des rechtwinkeligen Übergangs oder Übergangs in einem spitzen Winkel zur Gewindespitze einen V-förmigen Nutgrund haben, um die Herstellung der Nut zu vereinfachen.

Es sind Betonschrauben angedacht, bei denen die gesamte Spitze aus Hartmetall ist. Die Erfindung schafft ferner eine gewindeformende Schraube zum unmittelbaren Einschrauben in Beton, Stein oder Mauerwerk, bei der ein sicherer Halt zwischen dem Hartmetall und dem vorzugsweise rostfreien Stahl vorhanden ist. Dies wird erfindungsgemäß dadurch erreicht, daß die Schraube im Bereich ihrer Spitze zumindest eine Ausnehmung hat, in der eine Hartmetall-Schneidplatte befestigt ist. Bei der erfindungsgemäßen Schraube ist folglich nicht die gesamte Spitze aus Hartmetall, sondern Ausnehmungen bilden Aufnahmetaschen für die Hartmetall-Schneidplatten. Das Drehmoment wird somit in den weichen und flexiblen Schaft eingeleitet, und ein Lösen der Schneidplatten von ihrem Sitz kann ausgeschlossen werden.

Vorzugsweise haben auch die Schneidplatten Abschnitte des Gewindes, so daß das Gewinde im Bereich der Schneidplatten absatzlos in das Gewinde im angrenzenden Stahl übergeht.

Die Ausnehmung verläuft vorzugsweise axial und ist seitlich offen, wobei die Schneidplatte seitlich teilweise aus der Ausnehmung herausragt. Die Ausnehmung kann im Querschnitt U-förmig sein, also zum Beispiel durch Fräsen erzeugt werden.

Damit sich die Schraube in dem Bohrloch möglichst nicht verkantet, sollte wenigstens ein Paar von diametral gegenüberliegenden Schneidplatten vorgesehen sein.

Die Schraube kann auch spitzenseitig einen radial durchgehenden Schlitz aufweisen, in dem eine Schneidplatte befestigt ist, die an entgegengesetzten Seiten der Schraube teilweise seitlich aus der Ausnehmung herausragt, so daß nur eine Ausnehmung herzustellen ist und nur eine Schneidplatte in ihr zu befestigen ist, die aber an ihren entgegengesetzten Seiten schneidet.

Die Schneidplatte kann durch Klemmen, Verstemmen und/oder Löten an der Schraube befestigt sein.

Gemäß der bevorzugten Ausführungsform der erfindungsgemäßen Schraube besteht diese, ausgenommen von der Hartmetall-Schneidplatte, aus einem rostfreien, ungehärteten Stahl, was ihr eine hohe Festigkeit gibt.

Zu betonen ist, daß die in den Ansprüchen aufgeführten Merkmale in Kombination zu einem sehr niedrigen Eindrehmoment führen, daß aber theoretisch auch einzelne Merkmale für sich bereits, unabhängig von den Merkmalen im Anspruch 1, zu einer Betonschraube mit verbesserten Eigenschaften führen können.

Weitere Merkmale und Vorteile der Erfindung ergeben sich aus der nachfolgenden Beschreibung und aus den nachfolgenden Zeichnungen, auf die Bezug genommen wird.
- Figur 1 eine Seitenansicht der erfindungsgemäßen Schraube,
- Figur 2 eine Schnittansicht längs der Linie II-II in Figur 1,
- Figur 3 eine Schnittansicht längs der Linie III-III in Figur 1,
- Figur 4 eine vergrößerte Ansicht des mit "Z" bezeichneten, umrahmten Bereichs in Figur 1,
- Figur 5 eine Seitenansicht einer zweiten Ausführungsform der erfindungsgemäßen Schraube mit zwei Hartmetall-Schneidplatten,
- Figur 6 eine Schnittansicht längs der Linie VI-VI in Figur 5,
- Figur 7 eine Seitenansicht einer erfindungsgemäßen Schraube gemäß einer dritten Ausführungsform mit einer zweiseitig wirkenden Hartmetall-Schneidplatte und
- Figur 8 eine Schnittansicht längs der Linie VIII-VIII in Figur 7.

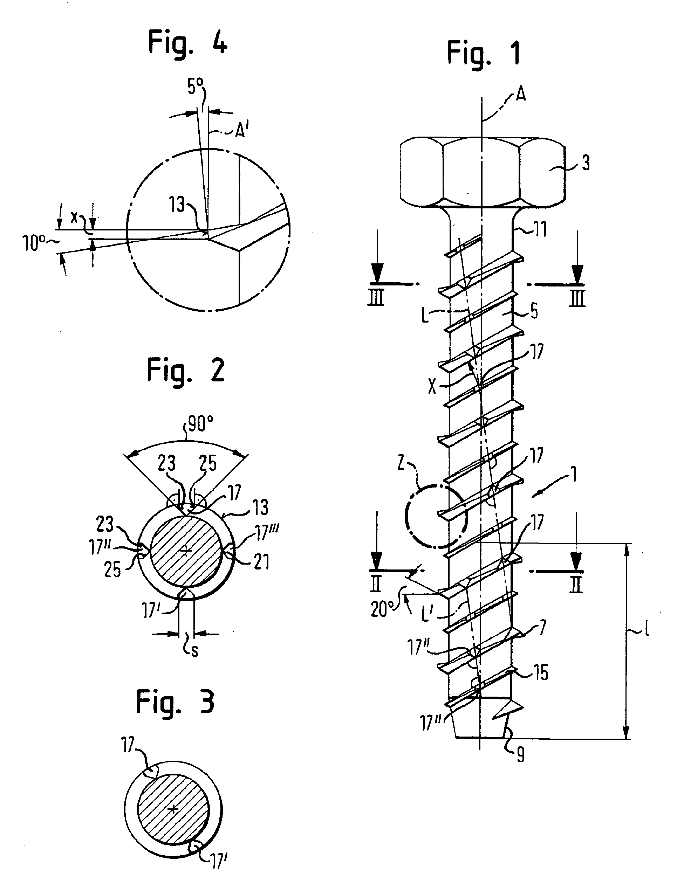

In Figur 1 ist eine gewindeformende Schraube 1 dargestellt, die unmittelbar in Beton, Stein, Mauerwerk oder dergleichen eingeschraubt wird. Dübel werden zur Befestigung der Schraube nicht vorgesehen. Die Schraube hat einen Schraubenkopf 3, eine entgegengesetzte, abgeflachte Spitze und einen Schaft 5. Ein Gewinde 7 erstreckt sich vom spitzenseitigen Ende 9 bis zu einem kopfseitigen Ende 11. Das Gewinde, das in Figur 4 näher dargestellt ist, hat eine spitzenseitige Flanke mit einem Winkel von 20° zu einer Ebene rechtwinkelig zur Schraubenachse A. In einem sehr flachen Winkel von etwa 10° schneidet die kopfseitige Flanke die Ebene rechtwinklig zur Achse A. Die Gewindespitze 13 ist gebrochen und weist eine Fläche auf, die in einem Winkel von etwa 5° zu einer Geraden A' steht, die parallel zur Achse A liegt.

Neben dem Gewinde 7 besitzt der Schaft 5 noch ein zweites Gewinde, das als Zentriergewinde 15 bezeichnet wird und parallel zum Gewinde 7 verläuft, so daß man von einem zweigängigen Gewinde sprechen könnte.

Die Tiefe des Gewindes 7 ist mehr als dreimal so groß wie die des Zentriergewindes 15.

Das Gewinde 7 und das Zentriergewinde 15 werden vom spitzenseitigen Ende 9 bis zum schraubenkopfseitigen Ende 11 von Nuten 17' bis 17"' mehrfach unterbrochen. Diese Nuten gehen, wie in den Figuren 2 und 3 zu sehen ist, bis zum Gewindegrund oder in anderen Worten, bis zum Kern des Schaftes 5. Am spitzenseitigen Ende 9 sind pro Gewindegang jedoch mehr Nuten vorgesehen als am kopfseitigen Ende, wie der Vergleich der Figuren 2 und 3 zeigt.

Vier Nuten pro Gewindegang erstrecken sich von der Spitze der Schraube 1 aus über eine Länge L, die in etwa ein Drittel der Schaftlänge ist. Anschließend sind nur noch zwei Nuten 17" und 17"' pro Gewindegang vorgesehen.

Die Nuten benachbarter Gewindegänge sind zueinander ausgerichtet, so daß sie längs Linien L verlaufen.

Die Linien L und L' verlaufen im wesentlichen axial, genauer gesagt jedoch leicht gewinkelt, bilden also eine Wendel mit hoher Steigung und schneiden die Gewinde 7, 15 in einem rechten Winkel.

Wie den Figuren 2 und 3 zu entnehmen ist, liegen die Nuten, in den Querschnitten gesehen, stets symmetrisch zur Schraubachse A an gegenüberliegenden Seiten. Die Nuten 17, 17' einerseits und 17" und 17"' bilden jeweils Pärchen.

Jede Nut 17 bis 17"' hat einen V-förmigen Nutgrund 21. Vom Nutgrund 21 aus bilden Stirnflächen 23, 25 Übergänge zu der Gewindespitze 13. Diese Übergänge sind, in einer Ansicht x quer zur Gewindelängserstreckung und wie in Figur 2 im Schnitt angedeutet, annähernd rechtwinkelig. Wichtig ist vor allem, daß die in Drehrichtung hintere Stirnfläche 25 keinen stumpfen Winkel mit der Gewindespitze 13 einschließt, sondern rechtwinkelig zu ihr verläuft oder sogar in einem spitzen Winkel, so daß eine Tasche oder eine Aushöhlung zur Unterbringung des Bohrmehls gebildet wird. Der rechtwinkelige oder spitze Übergang zur Gewindespitze 13 ist vor allem bei den Nuten im Gewinde 7 wichtig, bei dem Nuten im Zentriergewinde 15 hingegen von geringerer Bedeutung.

Die beiden Stirnflächen 23, 25 verlaufen rechtwinkelig zur Längserstreckung des Gewindes 7, so daß beim Eintritt von Bohrmehl in die durch die Nuten 17 bis 17"' gebildeten Räume keine Bewegungskomponente radial nach außen oder seitlich schräg zur Längserstreckung des Gewindes 7 vorhanden ist, die zu einem Herausdrücken des Bohrmehls aus den Räumen führen würde.

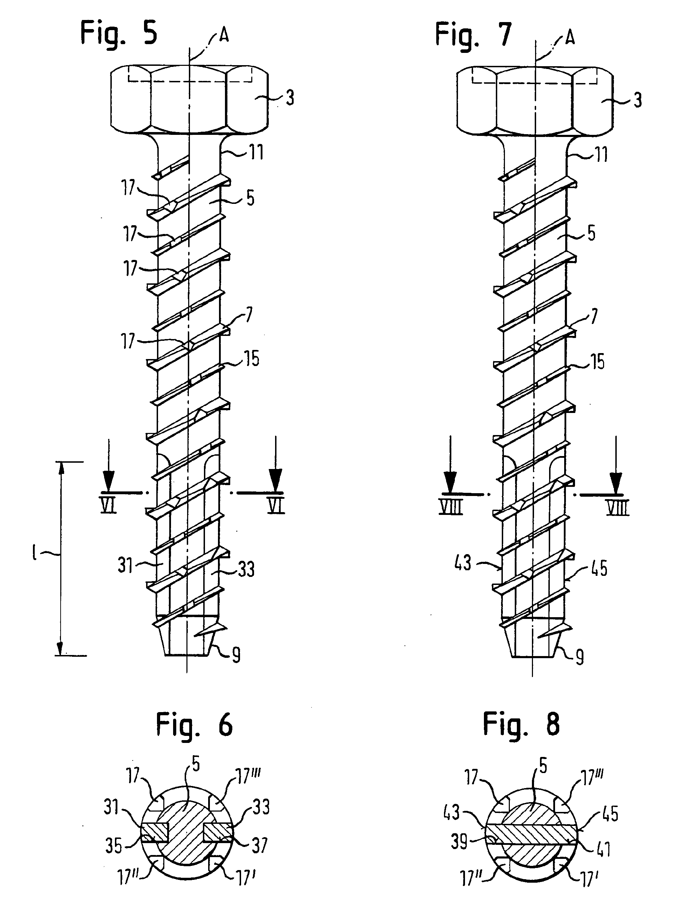

Die in Figur 5 gezeigte Schraube 1 entspricht im wesentlichen der in den Figuren 1 bis 4 gezeigten Schraube, so daß im folgenden nur noch auf die Unterschiede eingegangen wird und die bislang verwendeten Bezugszeichen für funktionsgleiche Abschnitte beibehalten werden.

Im Gegensatz zu der in den Figuren 1 bis 4 gezeigten Schraube besitzt die Schraube nach Figur 5b zwei Hartmetall-Schneidplatten 31, 33 am spitzenseitigen Ende 9 der Schraube 1. Von der äußersten Spitze der Schraube aus erstrecken sich diametral gegenüberliegend zwei U-förmige Ausnehmungen 35, 37 radial einwärts in den Schaft 5, in die die Schneidplatten 31, 33 eingesetzt werden. Die Schneidplatten 31, 33 werden durch Klemmen, Verstemmen und/oder Löten am Schaft 5 befestigt. Die Schneidplatten 31, 33 haben ebenfalls die Gewinde 7, 15, wobei man hier nur von Gewindeabschnitten sprechen kann, die die durch die Ausnehmungen 35, 37 gebildeten Lücken in den Gewinden 7, 15 absatzlos schließen. Mit ihren Gewindeabschnitten ragen die Schneidplatten 31, 33 aus den Ausnehmungen 35, 37 im Schaft heraus. Die Schneidplatten 31, 33 erstrecken sich in etwa über die bereits zuvor erwähnte Länge L. Zu beachten ist, daß die Nuten 17 bis 17"' im Bereich des spitzenseitigen Endes 9 so positioniert sind, daß sie nicht in die Schneidplatten 31, 33 hineinlaufen. Die Schneidplatten 31, 33 haben folglich keine Nuten, was ihre Standzeit erhöht.

Der Schaft 5 ist aus rostfreiem, ungehärtetem Stahl.

Die Ausführungsform nach Figur 7 entspricht der in Figur 6 dargestellten mit dem Unterschied, daß nicht zwei U-förmige Ausnehmungen 35, 37 vorgesehen sind, sondern ein durchgehender, radialer Schlitz 39, in den eine große Schneidplatte 41 eingesetzt und darin befestigt ist. Die Schneidplatte 41 hat zwei gegenüberliegende Flächen 43, 45 mit denen sie teilweise aus dem Schlitz herausragt und an denen sie Abschnitte des Gewindes 7 und des Zentriergewindes 15 hat.

## Patentansprüche

1. Gewindeformende Schraube zum unmittelbaren Einschrauben in Beton, Stein, Mauerwerk oder dergleichen, mit einem Gewinde (7), welches sich von der Schraubenspitze bis nahe zum Schraubenkopf (3) erstreckt,
wobei das Gewinde (7) von einem spitzenseitigen Ende (9) bis zu einem kopfseitigen Ende (11) durch sich im wesentlichen axial erstreckende Nuten (17 bis 17"') stellenweise unterbrochen ist, und
wobei das Gewinde (7) nahe des spitzenseitigen Endes (9) durch mehr Nuten (17 bis 17"') unterbrochen ist als nahe des kopfseitigen Endes (11).

2. Schraube nach Anspruch 1, **dadurch gekennzeichnet, daß** sie eine abgeflachte Spitze hat.

3. Schraube nach Anspruch 1 oder 2, **dadurch gekennzeichnet, daß** ein zusätzliches Zentriergewinde (15) parallel zum Gewinde (7) verlaufend vorgesehen ist, wobei die Gewindetiefe des Gewindes (7) mehr als doppelt so groß wie die des Zentriergewindes (15) ist.

4. Schraube nach einem der vorhergehenden Ansprüche, **dadurch gekennzeichnet, daß** sich die Nuten (17 bis 17"') auch durch das Zentriergewinde (15) erstrecken.

5. Schraube nach einem der vorhergehenden Ansprüche, **dadurch gekennzeichnet, daß** sich die Nuten (17 bis 17"') bis an den Kern des Schaftes (5) erstrecken.

6. Schraube nach einem der vorhergehenden Ansprüche, **dadurch gekennzeichnet, daß** die Nuten (17 bis 17"') in Querschnitten nahe des spitzenseitigen Endes (9) und nahe des kopfseitigen Endes (11) gesehen symmetrisch zur Schraubenachse (A) liegen.

7. Schraube nach einem der vorhergehenden Ansprüche, **dadurch gekennzeichnet, daß** Nuten (17 bis 17''') eines Gewindegangs zu Nuten (17 bis 17"') des benachbarten Gewindegangs ausgerichtet sind, so daß sie längs einer Linie (L, L') verlaufen.

8. Schraube nach Anspruch 7, **dadurch gekennzeichnet, daß** die Linie (L, L') auf der Schaftoberfläche eine Wendel bildet und das Gewinde (7, 15) rechtwinkelig schneidet.

9. Schraube nach einem der vorhergehenden Ansprüche, **dadurch gekennzeichnet, daß** nahe des spitzenseitigen Endes (9) vier am Umfang gleichmäßig verteilte Nuten (17 bis 17"') und nahe des kopfseitigen Endes (11) zwei sich axial gegenüberliegende Nuten (17, 17') vorgesehen sind.

10. Schraube nach einem der vorhergehenden Ansprüche, **dadurch gekennzeichnet, daß** die Nuten (17 bis 17"'), quer zur Gewindelängserstreckung gesehen, einen zumindest annähernd rechtwinkeligen Übergang zur Gewindespitze (13), zumindest am Übergang der in Eindrehrichtung hinteren Stirnfläche (25) der Nuten (17 bis 17"'), haben.

11. Schraube nach einem der vorhergehenden Ansprüche, **dadurch gekennzeichnet, daß** die Nuten (17 bis 17"') einen V-förmigen Nutgrund (21) haben.

12. Schraube insbesondere nach einem der vorhergehenden Ansprüche, **dadurch gekennzeichnet, daß** sie im Bereich ihrer Spitze zumindest eine Ausnehmung (35, 37) hat, in der eine Hartmetall-Schneidplatte (31, 33) befestigt ist, wobei die Schraube zum Einschrauben in Beton, Stein, Mauerwerk oder dergleichen vorgesehen ist und sich die Hartmetall-Schneidplatte in den Werkstoff einschneidet.

13. Schraube nach Anspruch 12, **dadurch gekennzeichnet, daß** die Schneidplatte (31, 33) mit dem Gewinde (7) versehen ist.

14. Schraube nach Anspruch 12 oder 13, **dadurch gekennzeichnet, daß** die Ausnehmung (35, 37) axial verläuft und seitlich offen ist, wobei die Schneidplatte (31, 33) seitlich teilweise aus der Ausnehmung (35, 37) herausragt.

15. Schraube nach einem der Ansprüche 12 bis 14, **dadurch gekennzeichnet, daß** die Ausnehmung (35, 37) im Querschnitt U-förmig ist.

16. Schraube nach einem der Ansprüche 12 bis 15, **dadurch gekennzeichnet, daß** die Ausnehmung (35, 37) an der Spitze beginnt.

17. Schraube nach einem der Ansprüche 12 bis 16, **dadurch gekennzeichnet, daß** wenigstens ein Paar von diametral gegenüberliegenden Schneidplatten (31, 33) vorgesehen ist.

18. Schraube nach einem der Ansprüche 12 bis 16, **dadurch gekennzeichnet, daß** sie spitzenseitig einen radial durchgehenden Schlitz (39) aufweist, in dem einen Hartmetall-Schneidplatte (41) befestigt ist, die an entgegengesetzten Seiten (43, 45) seitlich teilweise aus dem Schlitz (39) herausragt.

19. Schraube nach einem der Ansprüche 12 bis 18, **dadurch gekennzeichnet, daß** die Schneidplatte (31, 33, 41) durch Klemmen, Verstemmen und/oder Löten an dem Schraubenschaft befestigt ist.

20. Schraube nach einem der Ansprüche 12 bis 19, **dadurch gekennzeichnet, daß** die Schraube ausgenommen die Schneidplatte aus einem rostfreien, ungehärteten Stahl besteht.
